# EUROPEAN PATENT SPECIFICATION

(11) **EP 3 865 286 B1**
(45) Date of publication and mention of the grant of the patent: **07.01.2026**
(21) Application number: 21155460.5
(22) Date of filing: 05.02.2021
(51) Int. Cl.: B29C 70/24, B29C 70/86

(54) **COMPOSITE STRUCTURES WITH EMBEDDED SENSORS AND METHODS FOR THEIR MANUFACTURE**
VERBUNDSTRUKTUREN MIT EINGEBETTETEN SENSOREN UND VERFAHREN ZU DEREN HERSTELLUNG
STRUCTURES COMPOSITES COMPORTANT DES CAPTEURS INTÉGRÉS ET PROCÉDÉS POUR SES FABRICATIONS

(30) Priority: 06.02.2020 US 202016783695
(43) Date of publication of application: 18.08.2021
(73) Proprietor: Hamilton Sundstrand Corporation, Charlotte, NC 28217-4578 (US)
(72) Inventor: RAMPONE, Joseph C., Colchester, CT Connecticut 06415 (US); SCHMIDT, Walter Thomas, Marlborough, CT Connecticut 06447 (US)
(74) Representative: Dehns

(56) References cited:
- EP-A1- 0 863 811
- DE-A1- 102006 035 274
- DE-B3- 102007 003 274

## Description

### BACKGROUND

The present disclosure is generally related to composite structures, and more particularly to monitoring parameters in composite structures using sensors embedded within the composite structures.

Vehicles, such as aircraft, commonly employ composite structures due to the relatively high strength relative to weight ratio that such structures can provide the vehicle relative to structures formed from metals. Such composite structures are generally formed from a layup of sheets overlaying and bonded to one another by a resin. The sheets typically include longitudinal members which provide tensile strength to the composite structure along the longitudinal length of the sheet. The resin typically fixes the overlaying sheet to the underlying sheet, the resin thereby retaining the sheets to one another as an integral structure. The layup process is generally controlled to limit incorporation of contaminate between the sheets forming the composite structure layup, which can otherwise cause the composite structure to delaminate due to the sheets separating from one another.

In some applications it can be necessary to fix a sensor device to the composite structure, such as to measure strain or temperature. When required such sensors typically are positioned on the exterior of the composite structure to measure the parameter of interest rather than the interior of the structure due to the delamination hazard the embedded could otherwise pose to the composite structure. When placement on the exterior of the composite structure is not possible, e.g., due to the need to retain a smooth aerodynamic contour, sheets are generally added to the composite structure to reduce the likelihood of delamination.

Such systems and methods have generally been satisfactory for their intended purpose. However, there remains a need in the art for improved composite structures, sensor arrangements, and methods of making composite structures and sensing systems for composite structures. DE 10 2007 003274 B3 discloses a composite structure, comprising a first fibre sheet and at least one second fibre sheet overlaying the first fibre sheet, a sensor arranged between the first fibre sheet and the at least one second fibre sheet and a plurality of z-pins extending through the first fibre sheet and the at least one second fibre sheet.

### BRIEF DESCRIPTION

A composite structure is provided in claim 1. The composite structure includes a first fiber sheet and one or more second fiber sheet overlaying the first fiber sheet, a sensor arranged between the first fiber sheet and the one or more second fiber sheet, and two or more z-pins. The two or more z-pins extend through the first fiber sheet and the at least one second fiber sheet, wherein the plurality of z-pins is distributed about a periphery of the sensor to fix the one or more second fiber sheet to the first fiber sheet about the periphery of the sensor. The composite structure includes a sensor lead electrically connected to the sensor and arranged between the first fiber sheet and the one or more second fiber sheet. The sensor lead is captive between the first fiber sheet and the at least one second fiber sheet, with the plurality of z-pins being arranged along the sensor lead.

In addition to one or more of the features described above, or as an alternative, further embodiments of the composite structure may include that the first fiber sheet and the one or more one second fiber sheet are impregnated with a resin.

In addition to one or more of the features described above, or as an alternative, further embodiments of the composite structure may include that the first fiber sheet includes two or more first carbon fibers extending in parallel with one another along the first fiber sheet, the two or more z-pins being orthogonal relative to the two or more first carbon fibers.

In addition to one or more of the features described above, or as an alternative, further embodiments of the composite structure may include that the one or more second fiber sheet includes two or more second carbon fibers extending in parallel with one another along the second fiber sheet, the two or more z-pins being orthogonal relative to the two or more second carbon fibers.

In addition to one or more of the features described above, or as an alternative, further embodiments of the composite structure may include a resin fixing the at least one second fiber sheet to the first fiber sheet.

In addition to one or more of the features described above, or as an alternative, further embodiments of the composite structure may include that at least one of the two or more z-pins can have a metallic pin body.

In addition to one or more of the features described above, or as an alternative, further embodiments of the composite structure may include that one or more of the z-pins has a fibrous pin body.

In addition to one or more of the features described above, or as an alternative, further embodiments of the composite structure may include that the fibrous pin body is impregnated with a resin.

In addition to one or more of the features described above, or as an alternative, further embodiments of the composite structure may include a resin fixing the fibrous pin body to the first fiber sheet, the one or more second fiber sheet, and the periphery of the sensor.

In addition to one or more of the features described above, or as an alternative, further embodiments of the composite structure may include that the two or more z-pins are arranged about the periphery of the sensor in a first echelon and a second echelon.

In addition to one or more of the features described above, or as an alternative, further embodiments of the composite structure may include that the sensor lead has a first side and a second side both arranged between the first fiber sheet and the one or more second fiber sheet, that the two or more z-pins are arranged along the first side of the sensor lead, and that the two or more z-pins are arranged along the second side of the sensor lead.

In addition to one or more of the features described above, or as an alternative, further embodiments of the composite structure may include that the two or more z-pins are arranged on one first side and the second side of the sensor lead in a first echelon and a second echelon.

In addition to one or more of the features described above, or as an alternative, further embodiments of the composite structure may include that the sensor includes a strain gauge, a thermocouple, or is a wireless sensor.

In addition to one or more of the features described above, or as an alternative, further embodiments of the composite structure may include a sensor lead electrically connected to the sensor and arranged between the first fiber sheet and the one or more second fiber sheet, and a controller in communication with the sensor through the sensor lead.

In addition to one or more of the features described above, or as an alternative, further embodiments may include a nacelle or a space suit upper torso hard shell including a composite structure as described above.

A sensor arrangement is also provided. The sensor arrangement includes a composite structure as described above. The first fiber sheet and the one or more second fiber sheet are impregnated with a resin, the first fiber sheet includes two or more first carbon fibers extending in parallel with one another along the first fiber sheet, and one or more of the z-pins is orthogonal relative to the two or more first carbon fibers. The second fiber sheet includes two or more second carbon fibers extending in parallel with one another along the at least one second fiber sheet, the two or more of z-pins are orthogonal relative to the two or more second carbon fibers, and a sensor lead is electrically connected to the sensor. The sensor lead is arranged between the first fiber sheet and the one or more second fiber sheet and a controller with a user interface and disposed in communication with the sensor through the sensor lead, the controller responsive to instructions to provide an indication of strain greater than a predetermined value on the user interface.

A method of making a composite structure is also provided as defined in claim 12.

Technical effects of the present disclosure include the capability to more closely position (or directly position) the sensor at a location of interest to measure a sensed parameter. Technical effects of the present disclosure also include the capability to separate the sensor from the external environment using the composite structure, providing protection to the sensor not otherwise available with surface placement of the sensor. Technical effects of the present disclosure additionally include the capability to embed sensors in prepreg PMC layups without limiting strength of the composite structure, limiting the expected service life of the composite structure, and/or without requiring the additional layers in the layup to compensate for the interruption to the composite structure associated with the sensor.

### BRIEF DESCRIPTION OF THE DRAWINGS

The following descriptions should not be considered limiting in any way. With reference to the accompanying drawings, like elements are numbered alike:
FIG. 1 is a schematic view of a vehicle constructed in accordance with the present disclosure, showing a composite structure with an embedded sensor providing a signal indicative of a parameter sensed from within the composite structure;
FIG. 2 is a schematic view of the composite structure of FIG. 1, showing a sensor arranged between a first fiber sheet and the second fiber sheet with a plurality of z-pins distributed about the sensor periphery to fix the sensor between the first fiber sheet and the second fiber sheet;
FIG. 3 is an exploded view of the composite structure of FIG. 1, showing fibers and matrix materials of the first fiber sheet and the second fiber sheet in a layup with the sensor between the first fiber sheet and the second fiber sheet;
FIGS. 4A and 4B are a schematic partial plan view and a schematic partial perspective views of a portions of the composite structure of the FIG. 1, showing the arrangement of the z-pins about the sensor and the sensor lead as well as between fibers of the first fiber sheet and the second fiber sheet, respectively; and
FIG. 5 is schematic view of another example of the composite structure of FIG. 1, showing a wireless sensor embedded between a first fiber sheet and second fiber sheet by a plurality of z-pins; and
FIG. 6 is a block diagram of a method of making a sensor assembly, showing operations of the method according to an illustrative and non-limiting example of the method.

### DETAILED DESCRIPTION

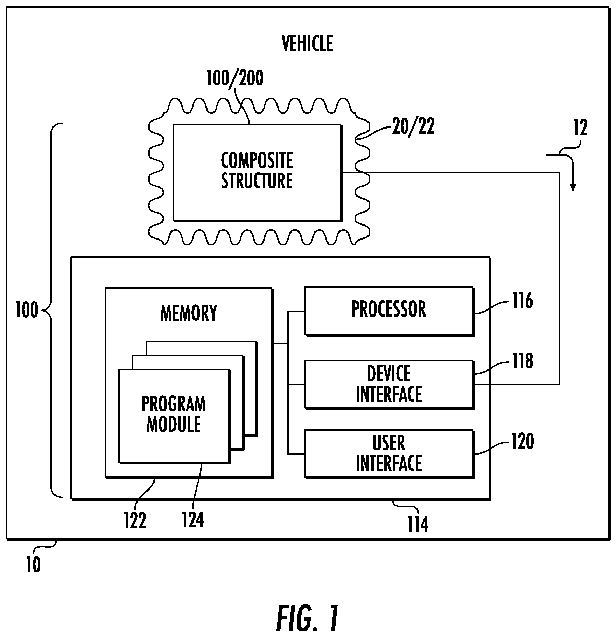

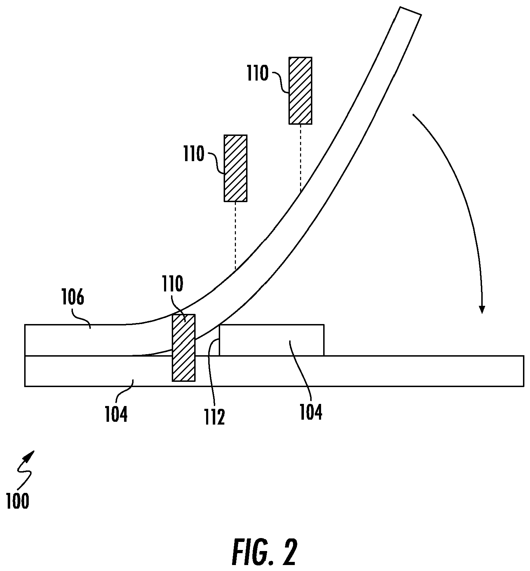

Reference will now be made to the drawings wherein like reference numerals identify similar structural features or aspects of the subject disclosure. For purposes of explanation and illustration, and not limitation, a partial view of an example of a composite structure constructed in accordance with the disclosure is shown in FIG. 1 and is designated generally by reference character 100. Other embodiments of composite structures, sensor arrangements and methods of making composite structures are provided in FIGS. 2-6, as will be described. The systems and methods described herein can be used for monitoring parameters in composite structures, such as for monitoring strain in vehicle structures such as engine nacelles and space suit hard shells, though the present disclosure is not limited to any particular type of vehicle or to any particular parameter in general.

Referring to FIGS. 1 and 2, a vehicle 10 is shown. The vehicle 10 includes the composite structure 100 and a sensor arrangement 102. The composite structure 100 generally includes a first fiber sheet 104 (shown in FIG. 2), at least one second fiber sheet 106 (shown in FIG. 2) overlaying the first fiber sheet 104, a sensor 108 (shown in FIG. 2), and two or more z-pins 110 (shown in FIG. 2). The sensor 108 is arranged (e.g., embedded) between the first fiber sheet 104 and the second fiber sheet 106. The two or more z-pins 110 extend through the first fiber sheet 104 and the at least one second fiber sheet 106 and are further distributed about a periphery 112 (shown in FIG. 2) of the sensor 108 to fix the at least one second fiber sheet 106 to the first fiber sheet 104 about the periphery 112 of the sensor 108.

The sensing system 102 includes a controller 114 having a processor 116, a device interface 118, a user interface 120, and a memory 122. The device interface 118 connects the processor 116 to the sensor 108 (shown in FIG. 2) and is arranged to communicate a signal 12 from the sensor 108 indicative of a parameter of interest, e.g., strain and/or temperature, to the processor 116. The processor 116 is operatively connected to the user interface 120 and is disposed in communication with the memory 122. The memory 122 has a plurality of program modules 124 recorded on the memory 122 that, when read by the processor 116, cause the processor 116 to execute certain operations. In this respect the controller 114 is response to the instructions recorded on the member 122 to monitor a parameter of interest using the sensor 108 via the signal 12.

In certain examples the vehicle 10 includes a space suit upper torso hard shell 20 formed at least in part by composite structure 100, and the instructions cause the processor 116 to communicate an indication 14 of strain greater than a predetermined value, e.g., sufficient to compromise integrity of the vehicle 10. For example, strain measurements associated with an impact, e.g., a fall, can be compared to a predetermined value and the indication 14, e.g., an indication of strain, displayed on the user interface 120 when the strain measurements exceed the predetermined value. In accordance with certain examples the vehicle 10 includes a nacelle structure 22 formed at least in-part by composite structure 100.

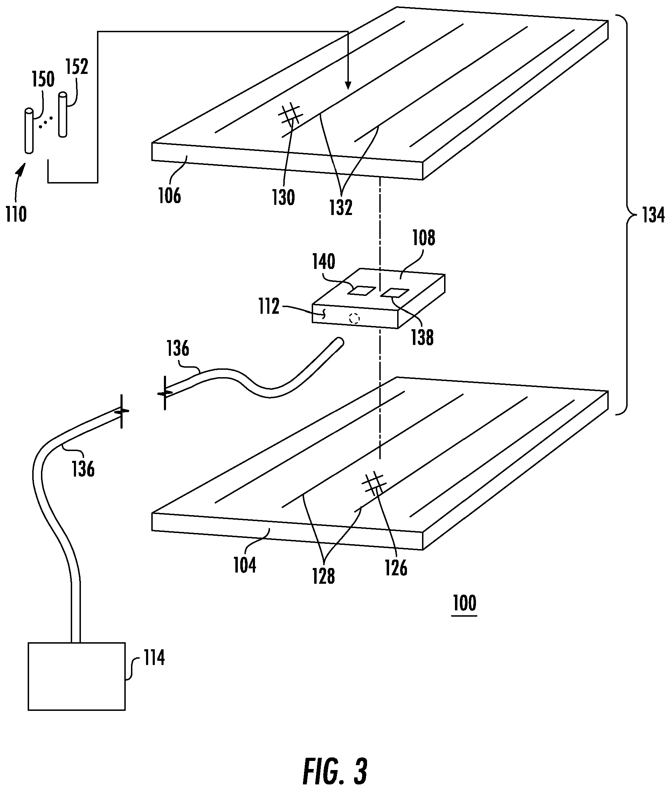

With reference to FIG. 3, the composite structure 100 is shown in an exploded view. The first fiber sheet 104 includes a thermoset polymer matrix material 126 and a plurality of fibers 128. The thermoset polymer matrix material 126 bonds the plurality of fibers 128 together to form a unitary sheet structure. In certain examples the plurality of fibers 128 includes a plurality of first carbon fibers. In accordance with certain examples the plurality of fibers 128 includes at least one of glass fiber, basalt fiber, and/or aramid fiber. It is also contemplated that, in accordance with certain examples, that the thermoset polymer matrix material 126 can include a resin and hardener, such as an epoxy resin. Examples of suitable fiber sheets include HexPly^{®} prepregs, available from the Hexcel Corporation of Stamford, Connecticut.

The at least one second fiber sheet 106 is similar to the first fiber sheet 104 and this respect includes a thermoset polymer matrix material 130 and a plurality of fibers 132, e.g., a plurality of second carbon fibers, arranged conformally with the first fiber sheet 104 and the sensor 108. It is contemplated that the at last one second fiber sheet 106 overly the first fiber sheet 104 in stack or layup 134. It is also contemplated that the first fiber sheet 104 and the at least one second fiber sheet 106 cooperate in the stack or layup 134 to form a unitary structure once cured, the thermoset polymer matrix material 126 of the first fiber sheet 104 and the thermoset polymer matrix material 130 of the at least one second fiber sheet 106 each to the other within the stack or layup 134. In certain examples the thermoset polymer matrix material 126 of the first fiber sheet 104 and the thermoset polymer matrix material 130 of the at least one second fiber sheet 106 are identical in composition. In accordance with certain examples the plurality of fibers 128 of the first fiber sheet 104 and the plurality of fibers 132 of the at least one second fiber sheet 106 are identical in composition. Although shown and described herein as including a first fiber sheet 104 and a single second fiber sheet 106, it is to be understood and appreciated that the stack or layup 134 can include more than two (2) fiber sheets with sensor 108 arranged between two of the sheets, as suitable for an intended application.

The sensor 108 includes a sensor lead 136. The sensor lead 136 electrically connects sensor 108 with the controller 114 and is arranged between the first fiber sheet 104 and the at least one second fiber sheet 106. It is contemplated that the sensor 108 be configured to generate the signal 12 containing information of parameter of interest acquired by sensor 108 locally, e.g., within the composite structure 100. In certain examples the sensor 108 includes a strain gauge 138 and the signal 12 includes information indicative of strain in the composite structure 100 at the location of the sensor 108. In accordance with certain examples the sensor 108 can include a thermocouple 140 and the signal 12 includes information indicative of temperature within the composite structure at the location of the sensor 108. As will be appreciated by those of skill in the art in view of the present disclosure, arranging the sensor 108 between the first fiber sheet 104 and the at least one second fiber sheet 106 enables the first fiber sheet 104 and the second fiber sheet 106 to protect the sensor 108 from the external environment 16, e.g., from precipitation, pressure, temperature, and/or external impact.

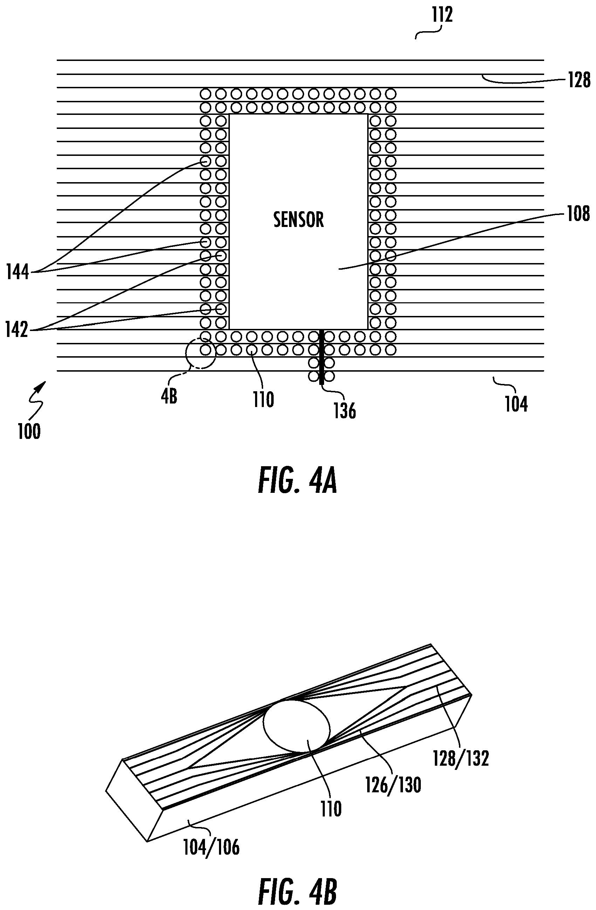

With reference to FIGS. 4A and 4B, the plurality of z-pins 110 are distributed about the periphery 112 of the sensor 108, the sensor 108 thereby being captive between the first fiber sheet 104 and the at least one second fiber sheet 106. Specifically, the plurality of z-pins 110 are distributed about the entirety of the periphery 112 of the sensor 108 and are substantially orthogonal relative to the first fiber sheet 104 and the at least one second fiber sheet 106. More specifically, the plurality of z-pins 110 are distributed about the periphery 112 of the sensor 108 in a first echelon 142 and the second echelon 144, the first echelon 142 interposed between the second echelon 144 and the sensor 108.

As will be appreciated by those of skill in the art in view of the present disclosure, arranging the plurality of z-pins 110 in echelons (e.g., rows) uniformly strengthens composite structure 100 about the sensor 108, the composite structure 100 thereby being able to resist delamination irrespective of orientation of the force otherwise urging delamination of the composite structure 100. Distributing the plurality of z-pins 110 along the sensor lead 136 locally strengthens the composite structure 100 in the vicinity of the sensor lead 136, limiting (or eliminating entirely) the likelihood that the sensor 108 otherwise operate initiate and/or propagate delamination of the composite structure 100. In the illustrated example the sensor 108 is rectangular and the plurality of z-pins 110 are distributed along each of the four (4) sides of the sensor 108. As will also be appreciated by those of skill in the art in view of the present disclosure, sensors having non-rectangular shapes can also benefit from the present disclosure.

In the illustrated example the plurality of z-pins 110 are distributed about the sensor lead 136. In this respect the sensor lead 136 has a first side 146 extending along the sensor lead 136, a second side 148 extending along the sensor lead 136 opposite the first side 146, and the plurality of z-pins 110 are distributed along both the first side 146 and the second side 148 of the sensor lead 136. Distributing the plurality of z-pins 110 along the sensor lead 136 locally strengthens the composite structure 100 in the vicinity of the sensor lead 136, limiting (or eliminating entirely) the likelihood that the sensor lead 136 otherwise operate initiate and/or propagate delamination of the composite structure 100. Although shown and described herein as including the sensor lead 136, it is to be understood and appreciated that wireless sensors can also benefit from the present disclosure.

With continuing reference to FIG. 3, it is contemplated that the plurality of z-pins 110 be metallic or fibrous. In certain examples the plurality of z-pins 110 can each have a metallic pin body 150 formed from a steel or aluminum material, which provides high resistance to the z-component of force exerted on the composite structure in the vicinity of the sensor 108. In accordance with certain example the plurality of z-pins 110 can each have a fibrous pin body 152. In such embodiments the fibrous pin body 152 allows the composite structure to flex in a limited way in response to the z-component of force exerted on the composite structure. In accordance with certain examples the fibrous pin body 152 can be impregnated with a resin material, reducing (or eliminating entirely) to infuse resin from the first fiber sheet 104 and/or the second fiber sheet 106 during cure of the stack or layup 134 during fabrication of the composite structure 100.

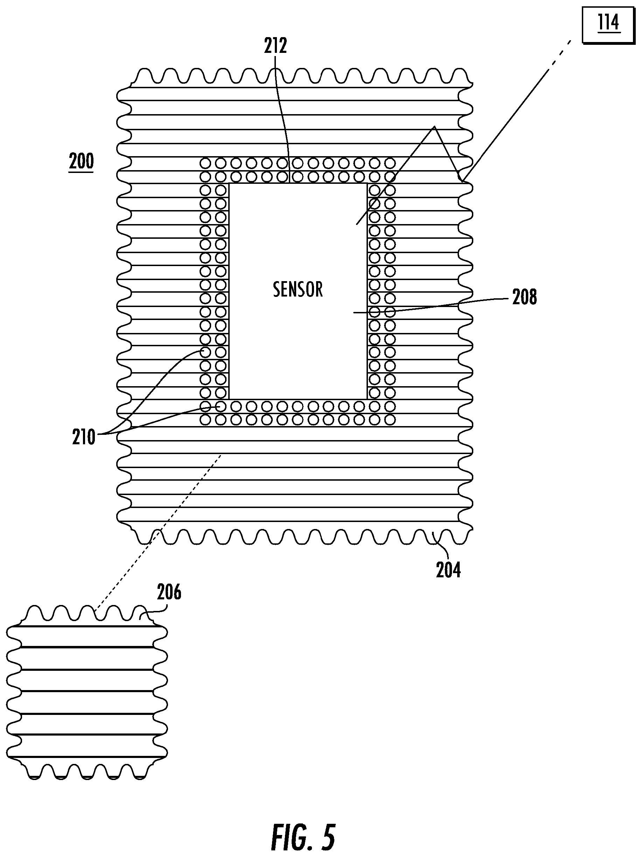

With reference to FIG. 5, a composite structure 200 is shown. The composite structure 200 is similar to the first composite structure 100 (shown in FIG. 1) and includes a first fiber sheet 204, at least one second fiber sheet 206 overlaying the first fiber sheet 204, a wireless sensor 208, and two or more z-pins 210. The sensor 108 is arranged (e.g., embedded) between the first fiber sheet 204 and the at least one second fiber sheet 206. The two or more z-pins 210 extend through the first fiber sheet 204 and the at least one second fiber sheet 206 and are distributed about a periphery 212 (shown in FIG. 2) of the wireless sensor 208 to fix the at least one second fiber sheet 206 to the first fiber sheet 204 about the periphery 212 of the sensor 208. As will be appreciated by those of skill in the art in view of the present disclosure, the wireless sensor 208 has no lead. Having no leads, employment of the wireless sensor 208 limits distortion of the surface of the composite structure 200 overlaying the wireless sensor 200 associated with the incorporation of the wireless sensor 208, limiting disruption of fluid flow across the composite structure 200.

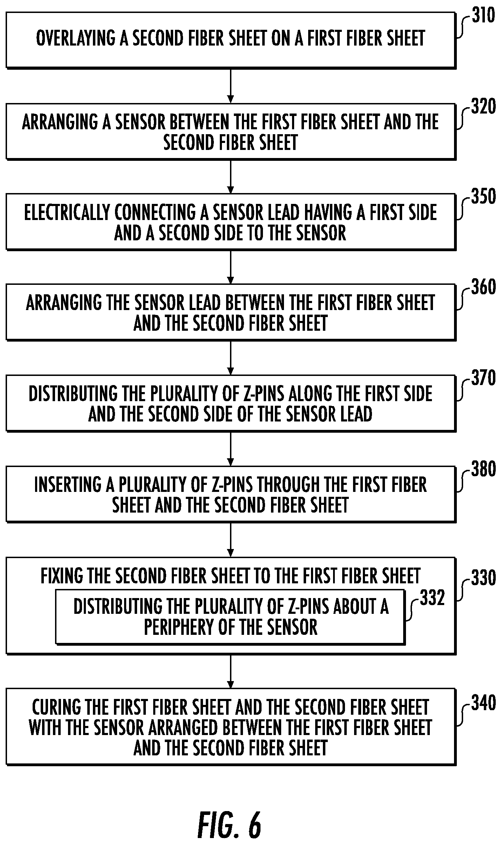

With reference to FIG. 6, a method 300 of making a composite structure, e.g., the composite structure 100 (shown in FIG. 1), is shown. As shown with box 310, the method 300 includes overlaying a second fiber sheet over a first fiber sheet, e.g., the at least one second fiber sheet 106 (shown in FIG. 2) over the first fiber sheet 104 (shown in FIG. 2). The method 300 also includes arranging a sensor, e.g., the sensor 108 (shown in FIG. 2), between the first fiber sheet and the at least one second fiber sheet, as shown with box 320. The at least one second fiber sheet is then fixed to the first fiber sheet, as shown with box 330. It is contemplated that the fixing the at least one second fiber sheet to the first fiber sheet include distributing a plurality of z-pins, e.g., the plurality of z-pins 110 (shown in FIG. 2), as shown with box 332. Fixing the at least one second fiber sheet to the first fiber sheet can also include curing the first fiber sheet and the at least one second fiber sheet with the sensor arranged between the first fiber sheet and the at least one second fiber sheet, as shown with box 340.

In certain examples the method 300 additionally includes electrically connecting a sensor lead, e.g., the sensor lead 136 (shown in FIG. 2), to the sensor, as shown with box 350. It is contemplated that the sensor lead be arranged between the first fiber sheet and the at least one second fiber sheet, as shown with box 360, and that the plurality of z-pins be distributed about both the first side of the sensor lead and the second side of the sensor lead, as shown with box 370. In certain examples the plurality of z-pins is arranged in a common number of echelons about both the sensor and the sensor lead, e.g., in the first echelon 142 (shown in FIG. 3) and the second echelon 144 (shown in FIG. 3).

Embedding sensors in composite structures can be desirable as it allows the composite structure to protect the sensor from the external environment. Embedding the sensor within the composite structure also allows the sensor to positioned directly at a point of interest, at a location of high stress or temperature, limiting (or eliminating entirely) the need to infer the magnitude of the parameter at the point of interest from measurement acquired from a remote location. However, embedding sensor directly within a composite structure interrupts the composite structure at the sensor location. Such interruptions can concentrate stress, propagate flows, and enable delamination in prepreg polymer matrix composites.

In examples described herein z-pins are employed to locally add strength at the embedded sensor location. In certain examples the z-pins are implanted in the out-of-plane direction of the composite structure about the periphery of the embedded sensor, limiting the likelihood of delamination propagation at the discontinuity in the composite structure associated with the embedded sensor while affording protection to the embedded sensor via the composite structure. In accordance with certain examples z-pins are additionally positioned about the periphery of the sensor lead to surround the sensor lead, limiting (or eliminating entirely) the likelihood of deamination due to the interruption in the composite structure associated with the embedded sensor lead.

Technical effects of the present disclosure include the capability to more closely position (or directly position) the sensor at a location of interest to measure a sensed parameter. Technical effects of the present disclosure also include the capability to separate the sensor from the external environment using the composite structure, providing protection to the sensor not otherwise available with surface placement of the sensor. Technical effects of the present disclosure additionally include the capability to embed sensors in prepreg PMC layups without limiting strength of the composite structure, limiting the expected service life of the composite structure, and/or without requiring the additional layers in the layup to compensate for the interruption to the composite structure associated with the sensor.

Technical effects of the present disclosure further include increasing reliability of composite structures employed in an outer space environment. As will be appreciated by those of skill in the art in view of the present disclosure, outer space environments are severe in the sense that they can include factors absent from terrestrial environments. For example, outer space environments can subject composite structures to extreme temperature excursions, intense radiation, and the potential for high velocity impacts from micrometeorites. Such factors can cause the composite layup of such composite structures to. The z-pinning techniques provided herein provide additional strength and durability to composite structures effectively prevents delamination and failure of composite structures, and composite structures employing sensors, in severe outer space environments.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

It is intended that the present disclosure not be limited to the particular embodiment disclosed as the best mode contemplated for carrying out this present disclosure, but that the present disclosure will include all embodiments falling within the scope of the claims.

## Claims

1. A composite structure (100), comprising:
a first fiber sheet (104) and at least one second fiber sheet (106) overlaying the first fiber sheet;
a sensor (108) arranged between the first fiber sheet and the at least one second fiber sheet;
a plurality of z-pins (110) extending through the first fiber sheet and the at least one second fiber sheet, wherein the plurality of z-pins is distributed about a periphery (112) of the sensor to fix the at least one second fiber sheet to the first fiber sheet about the periphery of the sensor; and **characterized by**
a sensor lead (136) electrically connected to the sensor, wherein the sensor lead is arranged between the first fiber sheet and the at least one second fiber sheet, wherein the sensor lead (136) is captive between the first fiber sheet and the at least one second fiber sheet, wherein the plurality of z-pins is arranged along the sensor lead.

2. The composite structure of claim 1, wherein the first fiber sheet (104) and the at least one second fiber sheet (106) are impregnated with a resin.

3. The composite structure of claim 1, wherein the first fiber sheet includes a plurality of first carbon fibers (128) extending in parallel with one another along the first fiber sheet, wherein the plurality of z-pins is orthogonal relative to the plurality of first carbon fibers; and/or
wherein the at least one second fiber sheet includes a plurality of second carbon fibers (132) extending in parallel with one another along the second fiber sheet, wherein the plurality of z-pins is orthogonal relative to the plurality of second carbon fibers.

4. The composite structure of claim 1, further comprising a resin fixing the at least one second fiber sheet to the first fiber sheet.

5. The composite structure of claim 1, wherein at least one of the plurality of z-pins has a metallic pin body (150).

6. The composite structure of claim 1, wherein at least one of the plurality of z-pins has a fibrous pin body (152), and preferably wherein the fibrous pin body is impregnated with a resin; or
further comprising a resin fixing the fibrous pin body to the first fiber sheet, the at least one second fiber sheet, and the periphery of the sensor.

7. The composite structure of any preceding claim, wherein the plurality of z-pins is arranged about the periphery of the sensor in a first echelon (142) and a second echelon (144).

8. The composite structure of any preceding claim, wherein the sensor includes a strain gauge or a thermocouple, wherein the sensor is a wireless sensor.

9. The composite structure of claim 1, further comprising:
a controller (114) in communication with the sensor through the sensor lead.

10. A nacelle or a space suit upper torso hard shell including a composite structure (100) as recited in claim 1.

11. A sensor arrangement, comprising:
a composite structure (100) as recited in the claim 1, wherein the first fiber sheet (104) and the at least one second fiber sheet (106) are impregnated with a resin,
wherein the first fiber sheet includes a plurality of first carbon fibers (128) extending in parallel with one another along the first fiber sheet, wherein the plurality of z-pins is orthogonal relative to the plurality of first carbon fibers,
wherein the second fiber sheet includes a plurality of second carbon fibers (132) extending in parallel with one another along the at least one second fiber sheet, wherein the plurality of z-pins is orthogonal relative to the plurality of second carbon fibers;
a sensor lead (136) electrically connected to the sensor, wherein the sensor lead is arranged between the first fiber sheet and the at least one second fiber sheet; and
a controller (114) with a user interface (120) and disposed in communication with the sensor through the sensor lead, the controller responsive to instructions to provide an indication of strain greater than a predetermined value on the user interface.

12. A method of making a composite structure, comprising:
overlaying at least one second fiber sheet on a first fiber sheet;
arranging a sensor between the first fiber sheet and the at least one second fiber sheet;
inserting a plurality of z-pins through the first fiber sheet and the at least one second fiber sheet; and
fixing the at least one second fiber sheet to the first fiber sheet by distributing the plurality of z-pins about a periphery of the sensor; **characterized by**
electrically connecting a sensor lead having a first side and a second side to the sensor; and
arranging the sensor lead between the first fiber sheet and the at least one second fiber sheet;
wherein fixing the second fiber sheet to the first fiber sheet by distributing the plurality of z-pins about the periphery of the sensor additionally includes distributing the plurality of z-pins along the first side and the second side of the sensor lead.

## Patentansprüche

1. Verbundstruktur (100), umfassend:
eine erste Faserschicht (104) und mindestens eine zweite Faserschicht (106), die die erste Faserschicht überlagert;
einen Sensor (108), der zwischen der ersten Faserschicht und der mindestens einen zweiten Faserschicht angeordnet ist;
eine Vielzahl von z-Stiften (110), die sich durch die erste Faserschicht und die mindestens eine zweite Faserschicht erstrecken, wobei die Vielzahl von z-Stiften um einen Umfang (112) des Sensors verteilt ist, um die mindestens eine zweite Faserschicht an der ersten Faserschicht um den Umfang des Sensors zu befestigen; und **dadurch gekennzeichnet, dass**
eine Sensorleitung (136) elektrisch mit dem Sensor verbunden ist, wobei die Sensorleitung zwischen der ersten Faserschicht und der mindestens einen zweiten Faserschicht angeordnet ist, wobei die Sensorleitung (136) zwischen der ersten Faserschicht und der mindestens einen zweiten Faserschicht gefangen ist, wobei die Vielzahl von z-Stiften entlang der Sensorleitung angeordnet ist.

2. Verbundstruktur nach Anspruch 1, wobei die erste Faserschicht (104) und die mindestens eine zweite Faserschicht (106) mit einem Harz imprägniert sind.

3. Verbundstruktur nach Anspruch 1, wobei die erste Faserschicht eine Vielzahl von ersten Kohlenstofffasern (128) beinhaltet, die sich parallel zueinander entlang der ersten Faserschicht erstrecken, wobei die Vielzahl von z-Stiften orthogonal zu der Vielzahl von ersten Kohlenstofffasern ist; und/oder wobei die mindestens eine zweite Faserschicht eine Vielzahl von zweiten Kohlenstofffasern (132) beinhaltet, die sich parallel zueinander entlang der zweiten Faserschicht erstrecken, wobei die Vielzahl von z-Stiften orthogonal zu der Vielzahl von zweiten Kohlenstofffasern ist.

4. Verbundstruktur nach Anspruch 1, ferner umfassend ein Harz, das die mindestens eine zweite Faserschicht an der ersten Faserschicht befestigt.

5. Verbundstruktur nach Anspruch 1, wobei mindestens einer der Vielzahl von z-Stiften einen metallischen Stiftkörper (150) aufweist.

6. Verbundstruktur nach Anspruch 1, wobei mindestens einer der Vielzahl von z-Stiften einen faserigen Stiftkörper (152) aufweist, und vorzugsweise wobei der faserige Stiftkörper mit einem Harz imprägniert ist; oder
ferner umfassend ein Harz, das den faserigen Stiftkörper an der ersten Faserschicht, der mindestens einen zweiten Faserschicht und dem Umfang des Sensors befestigt.

7. Verbundstruktur nach einem der vorhergehenden Ansprüche, wobei die Vielzahl von z-Stiften um den Umfang des Sensors in einer ersten Staffel (142) und einer zweiten Staffel (144) angeordnet ist.

8. Verbundstruktur nach einem der vorhergehenden Ansprüche, wobei der Sensor einen Dehnungsmesser oder ein Thermoelement beinhaltet, wobei der Sensor ein drahtloser Sensor ist.

9. Verbundstruktur nach Anspruch 1, ferner umfassend:
eine Steuerung (114) in Kommunikation mit dem Sensor durch die Sensorleitung.

10. Gondel oder Raumanzug-Oberkörper-Hartschale, beinhaltend eine Verbundstruktur (100) wie in Anspruch 1 angegeben.

11. Sensoranordnung, umfassend:
eine Verbundstruktur (100) wie in Anspruch 1 angegeben, wobei die erste Faserschicht (104) und die mindestens eine zweite Faserschicht (106) mit einem Harz imprägniert sind,
wobei die erste Faserschicht eine Vielzahl von ersten Kohlenstofffasern (128) beinhaltet, die sich parallel zueinander entlang der ersten Faserschicht erstrecken, wobei die Vielzahl von z-Stiften orthogonal zu der Vielzahl von ersten Kohlenstofffasern ist,
wobei die zweite Faserschicht eine Vielzahl von zweiten Kohlenstofffasern (132) beinhaltet, die sich parallel zueinander entlang der mindestens einen zweiten Faserschicht erstrecken, wobei die Vielzahl von z-Stiften orthogonal zu der Vielzahl von zweiten Kohlenstofffasern ist;
eine Sensorleitung (136), die elektrisch mit dem Sensor verbunden ist, wobei die Sensorleitung zwischen der ersten Faserschicht und der mindestens einen zweiten Faserschicht angeordnet ist; und
eine Steuerung (114) mit einer Benutzerschnittstelle (120) und in Kommunikation mit dem Sensor durch die Sensorleitung angeordnet, wobei die Steuerung auf Anweisungen reagiert, um eine Anzeige einer Dehnung größer als ein vorbestimmter Wert auf der Benutzerschnittstelle zum Bereitstellen.

12. Verfahren zum Herstellen einer Verbundstruktur, umfassend:
Überlagern einer ersten Faserschicht mit mindestens einer zweiten Faserschicht;
Anordnen eines Sensors zwischen der ersten Faserschicht und der mindestens einen zweiten Faserschicht;
Einführen einer Vielzahl von z-Stiften durch die erste Faserschicht und die mindestens eine zweite Faserschicht; und Befestigen der mindestens einen zweiten Faserschicht an der ersten Faserschicht durch Verteilen der Vielzahl von z-Stiften um einen Umfang des Sensors; **dadurch gekennzeichnet, dass**
eine Sensorleitung mit einer ersten Seite und einer zweiten Seite elektrisch mit dem Sensor verbunden wird; und
die Sensorleitung zwischen der ersten Faserschicht und der mindestens einen zweiten Faserschicht angeordnet wird;
wobei das Befestigen der zweiten Faserschicht an der ersten Faserschicht durch Verteilen der Vielzahl von z-Stiften um den Umfang des Sensors zusätzlich das Verteilen der Vielzahl von z-Stiften entlang der ersten Seite und der zweiten Seite der Sensorleitung beinhaltet.

## Revendications

1. Structure composite (100), comprenant :
une première feuille de fibre (104) et au moins une seconde feuille de fibre (106) se superposant à la première feuille de fibre ;
un capteur (108) disposé entre la première feuille de fibre et la au moins une seconde feuille de fibre ;
une pluralité de broches en z (110) se prolongeant à travers la première feuille de fibre et la au moins une seconde feuille de fibre, dans laquelle la pluralité de broches en z est répartie sur la périphérie (112) du capteur afin de fixer la au moins une seconde feuille de fibre à la première feuille de fibre sur la périphérie du capteur ; et **caractérisée par**
un conducteur de capteur (136) relié électriquement au capteur, dans lequel le conducteur de capteur est disposé entre la première feuille de fibre et la au moins une seconde feuille de fibre, dans lequel le conducteur de capteur (136) est captif entre la première feuille de fibre et la au moins une seconde feuille de fibre, dans lequel la pluralité de broches en z est disposée le long du conducteur de capteur.

2. Structure composite selon la revendication 1, dans laquelle la première feuille de fibre (104) et la au moins une seconde feuille de fibre (106) sont imprégnées d'une résine.

3. Structure composite selon la revendication 1, dans laquelle la première feuille de fibres inclut une pluralité de premières fibres de carbone (128) se prolongeant parallèlement les unes aux autres le long de la première feuille de fibre, dans laquelle la pluralité de broches en z est orthogonale par rapport à la pluralité de premières fibres de carbone ; et/ou
dans laquelle la au moins une seconde feuille de fibre inclut une pluralité de secondes fibres de carbone (132) se prolongeant parallèlement les unes aux autres le long de la seconde feuille de fibre, dans laquelle la pluralité de broches en z est orthogonale par rapport à la pluralité de secondes fibres de carbone.

4. Structure composite selon la revendication 1, comprenant également une résine fixant la au moins une seconde feuille de fibre à la première feuille de fibre.

5. Structure composite selon la revendication 1, dans laquelle au moins une de la pluralité de broches en z possède un corps de broche métallique (150).

6. Structure composite selon la revendication 1, dans laquelle au moins une de la pluralité de broches en z possède un corps de broche fibreux (152), et de préférence dans laquelle le corps de broche fibreux est imprégné de résine ; ou
comprenant également une résine fixant le corps de la broche fibreuse à la première feuille de fibre, à la au moins une seconde feuille de fibre, et à la périphérie du capteur.

7. Structure composite selon une quelconque revendication précédente, dans laquelle la pluralité de broches en z est disposée autour de la périphérie du capteur dans un premier échelon (142) et un second échelon (144).

8. Structure composite selon une quelconque revendication précédente, dans laquelle le capteur inclut une jauge de contrainte ou un thermocouple, dans laquelle le capteur est un capteur sans fil.

9. Structure composite selon la revendication 1, comprenant également :
un contrôleur (114) en communication avec le capteur par le câble du capteur.

10. Nacelle ou coque rigide de torse supérieur de combinaison spatiale incluant une structure composite (100) selon la revendication 1.

11. Agencement de capteur, comprenant :
une structure composite (100) selon la revendication 1, dans laquelle la première feuille de fibre (104) et la au moins une seconde feuille de fibre (106) sont imprégnées d'une résine,
dans laquelle la première feuille de fibres inclut une pluralité de premières fibres de carbone (128) se prolongeant parallèlement les unes aux autres le long de la première feuille de fibre, dans laquelle la pluralité de broches en z est orthogonale par rapport à la pluralité de premières fibres de carbone,
dans laquelle la seconde feuille de fibres inclut une pluralité de secondes fibres de carbone (132) se prolongeant parallèlement les unes aux autres le long de la au moins une seconde feuille de fibres, dans laquelle la pluralité de broches en z est orthogonale par rapport à la pluralité de secondes fibres de carbone ;
un conducteur de capteur (136) relié électriquement au capteur, dans lequel le conducteur de capteur est disposé entre la première feuille de fibre et la au moins une seconde feuille de fibre ; et
un contrôleur (114) avec une interface utilisateur (120) et disposé en communication avec le capteur par le fil conducteur du capteur, le contrôleur répondant aux instructions pour fournir une indication de contrainte supérieure à une valeur prédéterminée sur l'interface utilisateur.

12. Procédé de fabrication d'une structure composite, comprenant :
la superposition d'au moins une seconde feuille de fibre sur une première feuille de fibre ;
la mise en place d'un capteur entre la première feuille de fibre et la au moins une seconde feuille de fibre ;
l'insertion d'une pluralité de broches en z à travers la première feuille de fibre et la au moins une seconde feuille de fibre ; et
la fixation de la au moins une seconde feuille de fibre à la première feuille de fibre par répartition de la pluralité de broches en z sur la périphérie du capteur ; **caractérisé par** :
la connexion électrique d'un conducteur de capteur comportant un premier côté et un second côté au capteur ; et
la mise en place du conducteur de capteur entre la première feuille de fibre et la au moins une seconde feuille de fibre ;
dans lequel la fixation de la seconde feuille de fibre à la première feuille de fibre par la répartition de la pluralité de broches en z sur la périphérie du capteur inclut en plus la répartition de la pluralité de broches en z le long du premier côté et du second côté du conducteur du capteur.
